# EUROPEAN PATENT APPLICATION

(11) **EP 1 780 177 A2**
(43) Date of publication of application: **02.05.2007**
(21) Application number: 06123128.8
(22) Date of filing: 30.10.2006
(51) Int. Cl.: C02F 1/36, B02C 19/00, B01F 11/02, B01F 7/10, C02F 101/32

(54) **A device for decomposition for organic material**

(30) Priority: 28.10.2005 NO 20055036
(71) Applicant: Stromme Greentech AS, 5353 Straume (NO)
(72) Inventor: Strømme, Ingvald, 5353 Straume (NO); Indrevik, Georg, 5353 Straume (NO)
(74) Representative: Karlström, Lennart

(57) **Abstract**

A device for degradation of organic material by means of cavitations in the solution, where the device comprises a purifying chamber (1) in which the liquid to be cleaned is introduced into an inlet chamber (2) that is separated from an outlet chamber (3) by means of a separation plate (4) being rotary arranged about an axis of rotation and being provided with a plurality of cavitations devices (10) at its circumference, is described.

## Description

### Field of invention

The present invention relates to the use of cavitations in a solution for degradation of organic molecules and dispersed organic matter in a solution. More particular, the present invention relates to a device for obtaining cavitations in a solution for degradation of hydrocarbons and particular organic material for removal of the same from an aqueous solution, and degradation of higher hydrocarbons to carbons having a shorter chain length in an oil based solution, such as crude oil.

### Background for the invention

Water that have been in contact with hydrocarbons, such as produced water from the oil and gas exploitation and processing, ballast water from tankers etc., will comprise some dispersed or dissolved hydrocarbons, such as but not limited to, mono and poly aromatic hydrocarbons or carboxylic acids. Additional, process water from different kinds of process industry normally will comprise dissolved organic chemicals that have been added due to process requirements. The chemicals may e.g. be detergents or freeze point lowering additives etc. The added chemicals may, in addition to being a source for pollution themselves, keep otherwise insoluble chemicals in solution.

Discharge of carbonaceous solutes represents an environmental problem and the authorities have introduced strict requirements for the total amount of organic carbon (TOC ("Total Organic Carbon")) in water that is released into the environment. TOC may be present as particulate material in the liquid phase or be dissolved in the same. Some chemicals may cause a high TOC by keeping organic matter in solution and keep particles suspended in the liquid phase. Reducing TOC to fulfill the requirements from the authorities according to the state of the art, often requires either a chemical treatment of the water and/or a process based on distillation. Both process types are complicated and expensive and a simpler less expensive solution is therefore desirable.

It is known from the literature (Brown B and Goodman J. E., 1965, High Intensity Ultrasonics, Van Nostrand Princeton, Skov E., Pisani J. og Beale S. 1997, "Cavitation Induced Hydroxyl Radical Formation", American Institute of Chemical Engineering National meeting, Houston, TX, og Kalumuck K. M., Chahine G. L., Gumerov N. A., Aley P. D., & Frederick G. S., 2000, "Oxidation of Organic Compounds in Water with Cavitating Jets - Phase II", Dynaflow Inc. Tech. Rpt 98010) that free hydroxyl radicals are formed by producing ultrasonic cavitations in the water phase. These radicals, OH⁻, are strong oxidants and will oxidize carbonaceous material in the water phase. A sewage treatment plant using this technology is described in US4944886. Ultrasonic vibrations in the range from 50 to 150 kHz are used to produce cavitations for oxidation of the organic material in the sewage.

It is known from US5326468 and WO0007941 to use nozzles to produce cavitations in an aqueous liquid to oxidize organic material in the aqueous liquid. According to Young, 1989, a water jet passing through the nozzle openings having given design, will cause an explosive increase of the size of micro bubbles. When the micro bubbles leaves the nozzle opening the micro bubbles and cavities will collapse and the pressure within the micro cavities may increase to 1,2 x 10⁴ atmospheres and the temperature may increase to about 10 000 °K in a period of about 1 x 10⁻⁹ second. This difference in pressure and temperature will decompose TOC that will be released into the atmosphere.

A device for treatment of sludge by breaking down particles and agglomerates is known from DE A1 3912517. The device comprises a rotor with a plurality of radial arms placed in a house through which the sludge to be treated flows. However, only a part of the sludge is exposed to the high shear forces and cavitation as a substantial part of the sludge flows over the rotor and arms and is not forced to pass between the rotating arms. Accordingly, only a part of the liquid is actually being treated.

RU 2166987 describes a device for obtaining high shear forces and cavitation in a fluid. The device comprises a plurality of rotating plates on a common shaft. The rotating plates are provided with openings and teeth of different configurations for creation of high shear forces and cavitation in water flowing through the device.

The pressure and temperature differences caused by cavitations in a oil based solution may also cause "micro cracking", i.e. cracking inside of the imploding bubbles so that long hydrocarbon chains are broken into shorter chains, so that the viscosity is reduced. From a crude oil it may e.g. be required to remove / reduce the content of unwanted / harmful components such as naphtene acids, asphalthene, resin, sulphur compounds and different salts that may inactivate catalysts in a refinery. The treated oil will have a higher quality than the untreated oil, which may result in a higher price of the oil being reduced in heavy oil and residues. It is

An optimal process for removal / reduction of organic material in a water / liquid phase, or for treatment of an oil based solution, will require a continuous process. A continuous process is difficult to achieve using sound and/or by using nozzles.

### Summary of the invention

An objective of the present invention is thus to provide a device making it possible to achieve a more effective and a continuous process for reduction of TOC in aqueous solutions.

Another objective of the present invention is to provide a device making a simple, effective and continuous treatment of oil based solutions possible, such as e.g. crude oil or other oily solutions having a content of higher hydrocarbons and any other unwanted components, and thus a high viscosity to decrease the viscosity and/or to increase the quality thereof by removing unwanted components.

These objectives are according to the present invention achieved by a device for decomposition of dispersed or dissolved organic material in a liquid solution by means of cavitations in the solution, the device comprising a treatment chamber into which the solution to be treated is introduced into an inlet chamber that is separated from an outlet chamber by means of a substantially circular separation plate provided with a plurality of cavitation bodies, wherein an upper partition body is provided in the inlet chamber so that a ring shaped aperture is formed between the separation plate and the upper partition body from the walls of the treatment chamber towards the centre the treatment chamber. The ring shaped aperture formed between the separation plate and the upper partitioning body, through which all the liquid to be treated is forced, increases the time the liquid is exposed to high shear forces, and increases the resulting formation and collapse of micro bubbles that acts degrading on the organic material. As all the liquid is forced through this aperture and over the cavitation bodies, the total volume of the liquid is treated.

According to a first embodiment, a lower partition body is provided in the outlet chamber so that a ring shaped aperture is formed between the separation plate and the lower partition body from the walls of the treatment chamber towards the centre the treatment chamber. The presence of a lower partition body and formation of a second ring shaped aperture at the lower side of the separation plate, further increases the total exposure time for the liquid to the high shear forces and will further increase the efficiency of the device.

According to a preferred embodiment, a plurality of substantially radial channels is provided in the upper and/or lower partition body. The radial channels are preferably open towards the ring shaped apertures in their entire length. The radial channels increases the capacity of the device as the cross section of the flow path increases. When the channels are open towards the ring shaped aperture in their entire length, i.e. the channels are substantially radial grooves in the partition bodies; the fluid is able to be transferred from the high shear environment in the ring shaped aperture to the channels where the shear forces are lower. This results in an increased formation and collapse of micro bubbles and thus increased efficiency of the device.

According to another preferred embodiment, the cavitation bodies are substantially radial protruding teeth.

According to one embodiment a gas inlet is provided in the inlet chamber for addition of gas to the solution before it is exposed to the cavitations. Introduction of gas into the liquid to be treated may increase the formation and collapse of micro bubbles in the present device, thus increasing the efficiency. Additionally, the chemical properties of the gas may be used to help the decomposition of the organic material. If oxygen or an oxygen containing gas, such as air, is included, oxidation of the organic material will be increased.

### Short description of the figures

Figure 1 is a cross section of a purifying chamber according to the invention,

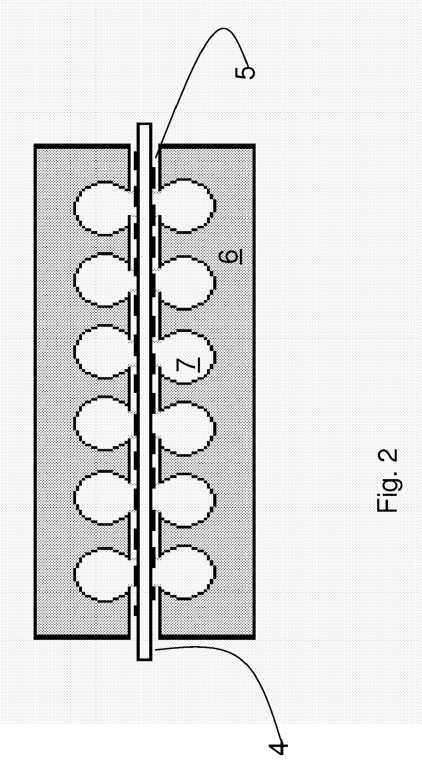

Figure 2 illustrates the section A-A in figure 1, and

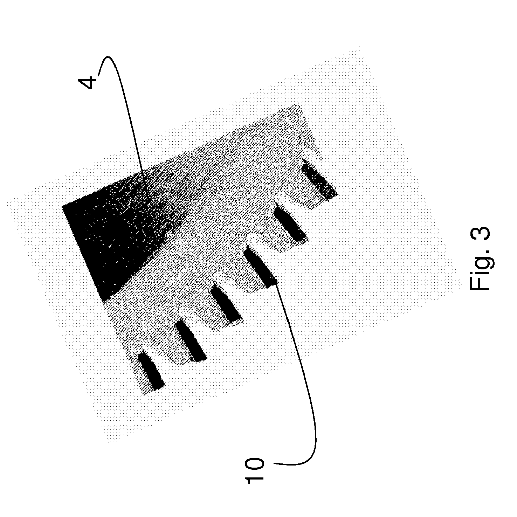

Figure 3 is a part view of the outer rim of a separation plate.

### Detailed description of the invention

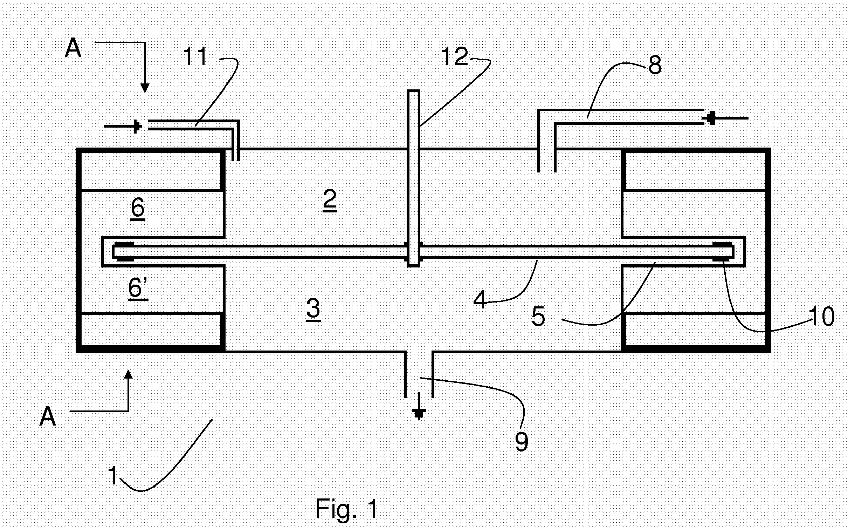

Figure 1 is an axial cross section through a purifying chamber 1 in a device according to the present invention. The purifying chamber 1 is substantially circular cylinder shaped. The purifying chamber 1 is divided into to parts, an inlet chamber 2, and an outlet chamber 3, by a separation plate 4. The separation plate 4 is a circular plate having a cogged circumference, and is connected to an axle shaft 12 that is substantially axially arranged in the purification chamber 1. The separation plate is provided with a plurality of radial arranged cavitations bodies 10. In the illustrated embodiment the separation plate has a design corresponding to the design of a circular saw, having a plurality of teeth 10 comprising a thickening at the front side relative to the direction of rotation, and where the teeth are tapered towards the rear end of the tooth. The cavitations bodies may alternatively be designed as openings in the separation plate, cogs, openings, slits etc.

The separation plate 4 is arranged in a groove 5 in a ring shaped partition body 6, 6' defining the cylinder wall of the purifying chamber. A plurality of radial arranged channels 7 are preferably arranged in the partition body, the channels being open towards the inlet chamber 2, the outlet chamber 3 and towards the groove 5. The channels 4 may have any shape but according to a preferred embodiment, the channels are cylindrical bores being open towards the groove 5 in their entire length. The separation body 6, 6' is illustrated as a ring shaped body having a grove within which the separation plate is arranged. Alternatively, the separation body may only comprise an upper separation body 6 that is arranged at the inlet side of the separation plate, and/or additionally comprise a lower separation body 6' at the outlet side of the separation plate.

The rotation speed of the separation plate is dependent on several factors, such as the diameter of the separation plate. A peripheral velocity of about 200 to 300 km/h has been found to be preferred. Factors as the amount of and composition of TOC in the water are factors that may influence the optimum speed of rotation.

When using the present device, the axle shaft 12 is rotated by means of a not shown motor so that the separation plate is rotated. The water to be purified is introduced into the inlet chamber 2 through an inlet 8. The water flows from the inlet chamber 2 through the channels 7 and the groove 5 along one side of the separation plate. The liquid in the channels and in the groove is put into rotation by the rotating separation plate. When the liquid has reached the teeth these forces are increased even further. This result in cavitations and creation of micro bubbles at the rear end of the teeth, at the same time as the water in the channels are brought into strong rotation. The micro bubbles are brought into the very turbulent water in the channels. In this environment created micro bubbles will collapse and new micro bubbles are created. This results in decomposition of particles purely by physical influence, the creation of free hydroxyl radicals as mentioned above and resulting oxidation of the dispersed organic material in the water.

The design of the separation plate and the separation body including the channels, ensures that the entire volume of water is exposed to the strong shear forces and cavitations, in that the total volume has to pass the cogging of the separation plate.

At the outlet side of the separation plate, the pressure and the shear forces are reduced. This result in collapse of the micro bubbles and in that the above mentioned processes are allowed to proceed. The water is led from below the separation plate into the outlet chamber 3 and from there out through an outlet 9.

If required / necessary a plurality of purifying chambers as described may be serially arranged. Two or more purifying chambers connected in series may have their separating plates arranged on axle shaft 12, so that the outlet chamber of the first unit effectively is the inlet chamber of the next, and so on.

It has been found to be advantageous to add a non-condensable gas, such as air, to the water before it is exposed to strong shear forces in the present device. The added gas promotes the formation of micro bubbles in the liquid and thus promotes the reactions that degrade TOC. The gas may be added through a gas inlet 11.

### Example

A prototype of a purifying chamber according to the present invention was built for testing. The first tests were performed for testing of the design of the purifying chamber and see if it satisfied the requirements for velocity of flow, capacity, development of heat, localization of the gas inlet etc.

The reaction chamber of the prototype had an inner diameter of 306.3 mm (position 2 and 3), having a total height of 300 mm. The peripheral velocity of the separation plate 4 could be adjusted from 0 to about 300 km/h. The channels 5 in the reaction chamber had a square cross section were the sides were 2.7 mm.

The velocity of flow during the tests was 600 1/h in test with process water, and 1.2 m³/h in tests with crude oil, respectively. The tests confirmed that the equipment satisfied the requirements relating to capacity and heat development.

## Claims

1. A device for decomposition of dispersed or dissolved organic material in a liquid solution by means of cavitations in the solution, the device comprising a treatment chamber (1) into which the solution to be treated is introduced into an inlet chamber (2) that is separated from an outlet chamber by means of a substantially circular separation plate (4) provided with a plurality of cavitation bodies (10), wherein an upper partition body (6) is provided in the inlet chamber (2) so that a ring shaped aperture (5) is formed between the separation plate (4) and the upper partition body (6) from the walls of the treatment chamber (1) towards the centre the treatment chamber.

2. Device according to claim 1, wherein a lower partition body (6') is provided in the outlet chamber (3) so that a ring shaped aperture (5) is formed between the separation plate (4) and the lower partition body (6') from the walls of the treatment chamber (1) towards the centre the treatment chamber.

3. Device according to claim 1 or 2, wherein a plurality of substantially radial channels (7) are provided in the upper and/or lower partition body (6, 6').

4. Device according to claim 3, wherein the radial channels (7) are open towards the ring shaped apertures (5) in their entire length.

5. Device according to one or more of the preceding claims, wherein the cavitation bodies (10) are substantially radial protruding teeth.

6. Device according to one or more of the preceding claims, wherein a gas inlet (11) is provided in the inlet chamber (2) for addition of gas to the solution before it is exposed to the cavitations.
